(19) Europäisches Patentamt
European Patent Office
Office européen des brevets

(11) **EP 2 917 917 B1**

(12) **FASCICULE DE BREVET EUROPEEN**

(45) Date de publication et mention
de la délivrance du brevet:
**07.03.2018 Bulletin 2018/10**

(21) Numéro de dépôt: **13802542.4**

(22) Date de dépôt: **08.11.2013**

(51) Int Cl.:
*G21C 3/17* (2006.01)      *G21C 3/62* (2006.01)
*G21C 21/02* (2006.01)      *G21C 3/04* (2006.01)
*G21C 3/06* (2006.01)

(86) Numéro de dépôt international:
**PCT/EP2013/073374**

(87) Numéro de publication internationale:
**WO 2014/072463 (15.05.2014 Gazette 2014/20)**

(54) **COMBUSTIBLE NUCLEAIRE OXYDE REGULATEUR DES PRODUITS DE FISSIONS CORROSIFS ADDITIVE PAR AU MOINS UN SYSTEME OXYDO-REDUCTEUR**

OXIDKERNBRENNSTOFF ALS REGLER VON KORROSIVEN SPALTPRODUKTEN, MIT MINDESTENS EINEM ZUGESETZTEN OXIDATIONSREDUKTIONSSYSTEM

OXIDE NUCLEAR FUEL WHICH IS A REGULATOR OF CORROSIVE FISSION PRODUCTS, ADDITIVATED WITH AT LEAST ONE OXIDATION-REDUCTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2012 FR 1260616**

(43) Date de publication de la demande:
**16.09.2015 Bulletin 2015/38**

(73) Titulaire: **Commissariat à l'Énergie Atomique et aux Énergies Alternatives
75015 Paris (FR)**

(72) Inventeurs:
• **RIGLET-MARTIAL, Chantal**
**13100 Le Tholonet (FR)**
• **BROTHIER, Méryl**
**13090 Aix en Provence (FR)**
• **MATHERON, Pierre**
**04100 Manosque (FR)**
• **PENNISI, Vanessa**
**13100 Aix en Provence (FR)**
• **BASINI, Virginie**
**13100 Aix en Provence (FR)**

(74) Mandataire: **Esselin, Sophie et al
Marks & Clerk France
Conseils en Propriété Industrielle
Immeuble Visium
22 avenue Aristide Briand
94117 Arcueil Cedex (FR)**

(56) Documents cités:
**FR-A1- 2 622 343      FR-A1- 2 706 066
JP-A- 2006 234 753      US-A1- 2010 091 933**

**Description**

Le domaine de l'invention est celui des combustibles nucléaires et notamment des combustibles nucléaires minimisant les effets de corrosion dans des crayons de combustible en cours de fonctionnement.

De manière générale, un combustible nucléaire peut se définir comme un matériau qui contient les noyaux d'actinides fissiles à l'origine des réactions de fission. Ce matériau peut-être sous diverses formes (métal pur, alliages métalliques, céramiques diverses - oxyde, carbure, nitrure, mélanges de céramique et de métal, mélanges de plusieurs céramiques, voire liquide, dans le cas, très particulier, des réacteurs à sels fondus). Ce matériau est enfermé dans un conteneur étanche, souvent appelé la gaine du combustible.

Afin, d'améliorer le comportement en fonctionnement normal et/ou incidentel ainsi que la durée de vie des combustibles nucléaires, il est recherché des modifications du combustible et ou de la gaine qui constitue la première barrière de confinement de ce dernier. Le plus souvent, par ces modifications est visée plus particulièrement une fonction à améliorer que cela soit vis-à-vis de la rétention des produits de fissions (PF) immanquablement générés lors du l'utilisation des combustibles en réacteur ou que cela soit vis-à-vis de la minimisation des interactions chimiques et mécaniques à l'interface entre les pastilles constitutives du combustible et la gaine (risque IPG pour Interaction Pastille Gaine).

De manière générale, durant l'utilisation de combustible nucléaire de type oxyde en réacteur, la matière fissile est soumise à des réactions de fission qui génèrent des espèces chimiques dites produits de fissions (PF) d'une part et libèrent de l'oxygène d'autre part. Certains PF sont non réactifs chimiquement tels les gaz rares notés GR (Xe, He, Kr,...) alors que d'autres se combinent avec l'oxygène libéré sous forme de phases indépendantes ou en solution solide dans le combustible, ou bien s'associent pour former des gaz dits volatils notés GV (espèces de l'iode, du tellure ou du césium), susceptibles de migrer jusqu'au volume libre présent entre le combustible et la gaine qui le renferme. Ce phénomène conduit à la génération de gaz et s'accompagne au fur et à mesure du taux de combustion du combustible d'une augmentation du potentiel d'oxygène au sein du matériau puisque notamment certains produits de fission ont moins d'affinité (tels les platinoïdes) avec l'oxygène initialement en liaison avec les atomes fissiles et/ou fissibles (Uranium, Pu, Th...) constitutifs du combustible. Par ailleurs, les transitoires de puissance induisent de forts gradients de températures qui modifient considérablement le potentiel d'oxygène localement au sein du matériau et par là-même les équilibres chimiques des produits de fission, à l'état gazeux notamment.

Cette double tendance (forte variation du potentiel oxygène et de la pression en gaz au sein de la gaine renfermant le combustible) induit une non maîtrise des conditions thermodynamiques au sein même du système délimité par l'espace interne de la gaine durant toute la durée d'utilisation du combustible, et ce d'autant plus que le taux de combustion est élevé et les variations de puissance importantes. En ce sens, les propriétés thermomécaniques (conductivité thermique, propriétés de fluage,...) du combustible (dépendant à la fois des conditions de températures et de potentiel d'oxygène) ne sont pas non plus maîtrisées mais plutôt subies en fonction de l'évolution induite par le taux de combustion et le mode de fonctionnement. Par ailleurs, cet effet est concomitant à un autre qui est lié à l'augmentation de la pression en gaz dans le volume laissé libre entre le combustible et la gaine ce qui induit des contraintes mécaniques sur cette dernière (pouvant conduire à des gonflements).

Un risque radiologique accru est également à noter, les produits de fissions gazeux ayant potentiellement un impact notable sur l'environnement en cas de rupture de la barrière de confinement (gaine). Enfin, certaines espèces gazeuses générées lors de l'utilisation du combustible en réacteur peuvent conduire à des phénomènes de corrosion de la gaine, les conditions thermodynamiques régnant dans le matériau pouvant conduire à des spéciations défavorables vis-à-vis des phénomènes de corrosion (préexistence d'espèces corrosives).

Pour l'ensemble de ces raisons, il est recherché la mise en oeuvre de moyens de prévention des phénomènes nuisibles décrits ou de limitations de leurs conséquences. L'état de l'art suivant expose les grandes catégories de moyens connus et permet de mettre en évidence le fait que ces moyens ne permettent pas d'une manière totalement satisfaisante de répondre globalement à la problématique précitée.

A noter enfin qu'un autre type de difficulté peut être rencontré toujours lié à la maîtrise du potentiel oxygène, et concernant la fabrication même du combustible. Le type de combustible visé par la présente invention et la manière de l'élaborer permettent de répondre à cette nécessité/intérêt de la maîtrise du potentiel oxygène qui impacte sensiblement le comportement au frittage du combustible et ses caractéristiques/propriétés finales à l'issue de cette étape de frittage.

Actuellement et classiquement, la pression partielle d'oxygène désignée $P_{O2}$, dans le système combustible-gaine est imposée spontanément par la fission survenant lors de l'utilisation du combustible en réacteur. En ce sens, cette $P_{O2}$ est fonction notamment du taux de combustion, ce qui ne permet pas une maîtrise du comportement du système combustible-gaine lors de son utilisation (avec potentiellement une non maîtrise de ses propriétés physiques et microstructurales).

Cette non maîtrise de la $P_{O2}$ ne permet pas par ailleurs de contrôler la spéciation des espèces au sein du système et conséquemment certains composés impactant négativement le système (vis-à-vis de la montée en pression ou des phénomènes de corrosion de la gaine notamment) peuvent naturellement être générés au cours des fissions (comme par exemple le composé $TeI_2$).

Plusieurs types d'amélioration ont été envisagés pour limiter l'impact des produits de fissions (PF) émis lors de l'utilisation du combustible nucléaire en réacteur vis-à-vis de la contrainte induite par l'IPG ou pour augmenter la rétention de ces PF au sein même du combustible.

Ces améliorations peuvent être classées selon les deux grandes familles suivantes :

1) Les combustibles à interface pastille gaine modifiée :

1.1 : Utilisation d'un matériau de type Getter piégeant :

Un certain nombre de solutions basées sur l'emploi d'un agent permettant le piégeage (chimique) de certaines espèces de PF, voire d'oxygène est revendiqué dans la littérature comme notamment dans les demandes de brevet EP 0541 458 A1 ou EP 050 8715 A1.

L'ensemble de ces solutions ne permet néanmoins pas de limiter, au plus près, la génération d'espèces gazeuses et corrosives ce qui conduit à la persistance de phénomènes locaux préjudiciables (avec notamment la modification de la microstructure du combustible lui-même). Les matériaux getters ne sont pas nécessairement efficients sur une large plage de température comme celle pouvant être imposée à un combustible en fonctionnement normal ou incidentel.

1.2 : Protection de la gaine par mise en oeuvre d'un gainage interne voire sur les pastilles elles-mêmes :

Ce type de solutions comme celles décrites dans les brevets EP 0 562 404 A3, US 4 022 662, US 4 029 545 ou US 4 025 288 en proposant l'interposition de feuille, couche ou multicouche de matériaux faisant office d'écran à l'interaction entre certains produits de fission et la gaine, a une efficacité toute relative car, soit possède une efficacité sélective (vis-à-vis de certaines espèces), soit est soumis à des phénomènes néfastes induits notamment par l'inter-diffusion sous irradiation, l'amorphisation ou des dilatations différentielles conduisant à une détérioration des propriétés attendues de la gaine dans sa globalité (tenue mécanique et bonne conductivité globale de la chaleur notamment).

Par ailleurs, la mise en place d'un tel écran au sein de gaine étroite comme celle constituant les assemblages de combustible, peut représenter une difficulté technique ou pour le moins une contrainte parfois rédhibitoire d'un point de vue industriel. La garantie de l'homogénéité du dépôt sur l'ensemble de la surface interne de la gaine n'est pas triviale voire non acquise dans certains cas, ce qui rend ce type de solution non pleinement satisfaisant.

2) Combustibles additivés :

2.1 : Piège/capture des PF particulièrement réactifs dans le processus IPG :

Ce type de solutions repose sur l'incorporation d'un additif ou un mélange dans le combustible lui-même pour jouer le rôle de « getter » tel que décrit par exemple dans le brevet CA 977 952. Les additifs sont dans ce type de solution des composés réactifs vis-à-vis des PF permettant la déstabilisation des espèces gazeuses corrosives au profit de la production d'autres qui ne le sont pas ou moins. A noter que la quantité visée de ces additifs pour être efficaces sont relativement importantes puisque pouvant atteindre 4% en masse. Ces additifs peuvent pour certains avoir également un rôle de dopant pour la croissance des grains. Néanmoins, comme évoqué précédemment les additifs tels que décrits dans la littérature ne permettent pas de satisfaire totalement la problématique générale énoncée pour une large plage de température et des valeurs de taux de combustion élevées.

2.2 : Combustible à microstructure améliorée (pouvant être combiné avec la solution dite à potentiel d'oxygène imposé) :

Un des moyens invoqués pour minimiser et/ou retarder l'émission de produits de fissions gazeux est la mise en oeuvre de combustible à gros grains. En effet, ce type de microstructure augmente le temps de parcours moyen des PF avant leur sortie, du matériau combustible (du fait notamment du coefficient de diffusion intra-granulaire des PF dans le combustible inférieur au coefficient de diffusion inter-granulaire). Ce type de stratégie est notamment décrit dans les brevets JP 2 655 908 (B2) et US2010 091933. Ils décrivent l'incorporation d'additifs (pouvant être le Gd et le Cr).

Néanmoins, l'incorporation de certains éléments impacte le coefficient de diffusion des PF au sein du combustible. Le choix des additifs n'est donc pas anodin. A noter que les dopants proposés sont généralement des métaux voire des oxydes comme ceux illustrés dans le brevet FR 2 817 385. La difficulté de mise en oeuvre de ce type de solution réside aussi dans le fait qu'il est peu aisé de maîtriser le potentiel oxygène lors de l'élaboration du combustible ce qui rend peu robuste la maîtrise de sa fabrication (notamment lors de l'étape de frittage) et donc également la maîtrise de sa microstructure (le potentiel oxygène étant fonction non seulement de la température mais aussi de l'atmosphère imposée dans le four de frittage).

Le combustible obtenu avec ce type de solution ou d'autres se voulant spécifiquement aptes à imposer le contrôle du potentiel oxygène par incorporation de dopants (sans nécessairement entraîner un effet d'augmentation de la taille de grains) ne permet pas en fait (comme notamment décrit dans le brevet JP 6 258 477A) une maîtrise stricte du potentiel oxygène dans une gamme optimisée pour d'une part améliorer la séquestration des PF et d'autre part en contrôler la spéciation, et ce afin de limiter avantageusement les espèces corrosives sur une large gamme de température et de taux de combustion. Il ne permet donc pas de répondre globalement à la problématique générale précitée.

Par exemple dans le brevet précité JP 625 8477 A, l'ajout de molybdène est utilisé comme un « getter », i.e. un consommateur d'oxygène selon la réaction $Mo + O_2 => MoO_2$ afin de pallier l'augmentation du taux d'oxygène libre avec le taux de combustion. L'argument de la maîtrise du potentiel oxygène donné dans le brevet est alors indirect, le tampon agissant du fait de la présence en cours de fonctionnement de $MoO_2$ et Mo.

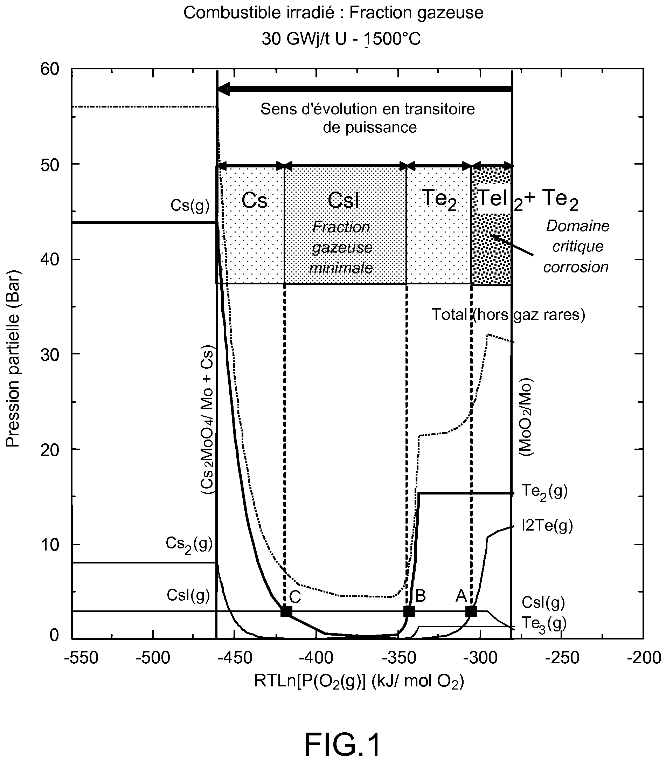

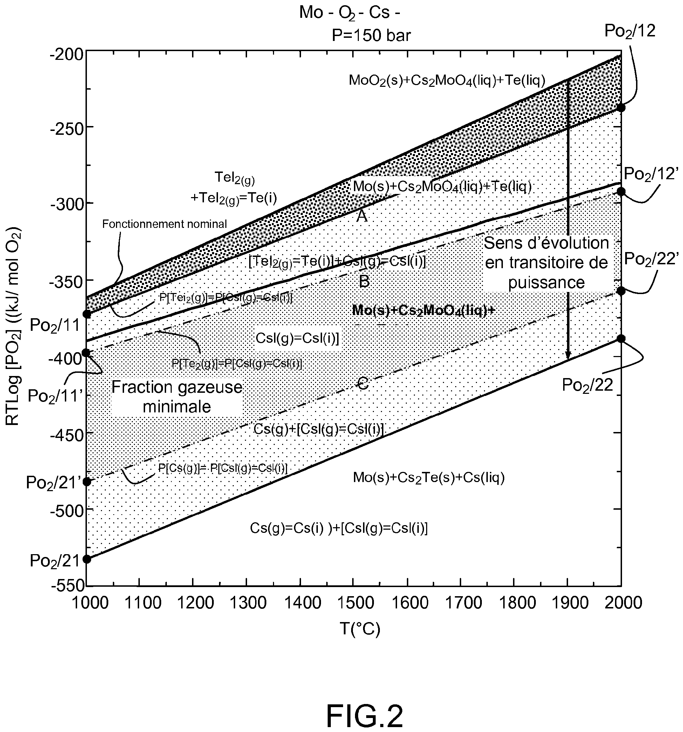

Dans le brevet JP 625 8477 A, si la capacité tampon nécessaire en oxydation est dimensionnée pour le piégeage de l'oxygène en excès, la capacité tampon en réduction n'est en revanche pas considérée. A noter que la valeur du potentiel oxygène imposé par l'équilibre rédox $(MoO_2/Mo)$ n'est pas non plus optimisée vis-à-vis des gaz volatils car elle se situe à l'intérieur du domaine de prédominance de la forme corrosive $TeI_2$, comme illustré en figure 1 et en figure 2, élaborées par le Demandeur qui montrent respectivement l'évolution du profil de pression partielle et spéciation dans un combustible $UO_2$ standard irradié à 30 GWj/t U à 1500°C en fonction du potentiel d'oxygène de fonctionnement et le domaine de prédominance des produis de fission volatils majeurs (hors He et Xe) dans un combustible $UO_2$ standard, en fonction de la température et du potentiel d'oxygène de fonctionnement.

Plus précisément, il ressort qu'en fonctionnement nominal, le potentiel d'oxygène est imposé par le couple rédox $(MoO_2/Mo)$. En rampe de puissance, le combustible subit à coeur une perturbation réductrice au cours de laquelle le potentiel d'oxygène décroît jusqu'au potentiel tampon du système $(Cs_2MoO_4/Mo + Cs)$.

Dans la plage de variation du potentiel d'oxygène, la spéciation des gaz de fission volatils, fonction de la $P_{O2}$, évolue. On divise l'intervalle en 4 domaines correspondant successivement à la prédominance des gaz $TeI_2 + Te_2$, $Te_2$, CsI et Cs.

L'iode est présent majoritairement sous les formes $TeI_2$ et/ou CsI. La forme $TeI_2$ étant la plus corrosive vis-à-vis du zircaloy matériau constitutif de la gaine, le domaine « $TeI_2+Te_2$ » correspond à la zone de potentiel la plus critique au regard de la corrosion de la gaine. Le domaine intermédiaire de prédominance de la seule forme CsI (intervalle [BC] de la figure 1) correspond à la zone de potentiel où la fraction gazeuse de gaz corrosifs est minimale (immobilisation maximale des PF), ce qui est favorable à la limitation du relâchement des gaz.

Par ailleurs, dans le domaine de fonctionnement du combustible, situé entre les systèmes tampons $(MoO_2/Mo)$ et $(Cs_2MoO_4/Mo + Cs)$, la spéciation des gaz varie en fonction de la $P_{O2}$ (comme illustré en figure 1) et de la température. Ainsi, les limites des domaines de prédominance sont matérialisées sur la figure 2 à toute température par les points A, B, C de la figure 1, correspondant aux conditions de $P_{O2}$ pour lesquelles la pression partielle des gaz présents, respectivement $I_2Te(g)$, $Te_2(g)$ et $Cs(g)$, est égale à celle du gaz CsI noté CsI(g), imposée par l'équilibre avec CsI à l'état liquide, noté CsI(l). En milieu oxydant, existe une plage de fonctionnement où la forme corrosive $TeI_2$, potentiellement réactive vis-à-vis de la gaine en zircaloy, est majoritaire sur tout l'intervalle de température entre 1000 et 2000°C.

La zone où la fraction gazeuse est minimale (composée de CsI(g) majoritairement) est encadrée par deux zones où prédominent $Te_2(g)$ (côté oxydant) ou $Cs_{(g)}$ (côté réducteur). C'est pourquoi, le Demandeur a considéré que la mise en oeuvre d'un système oxydo-réducteur dit tampon est particulièrement avantageux pour maintenir le combustible dans un domaine de fonctionnement optimal vis-à-vis des GF (en gris moyen) à tout instant et ce dans un contexte où, l'ensemble des solutions de l'art antérieur précité ne permet pas une maîtrise optimisée du potentiel oxygène et ce sur une large plage de température (typiquement 400-2000°C). En effet, certaines de ces solutions consistant à adjoindre des additifs oxydants visent plutôt à modifier la microstructure ou induire la passivation de la gaine par apport d'un excès d'oxygène, compétiteur de certaines espèces corrosives vis-à-vis du matériau constitutif de la gaine. Ces solutions reposent souvent sur l'addition d'élément en assez grande quantité (jusqu'à plus de 5% en poids en molybdène, décrit dans le brevet JP 6 258 477A). A noter enfin que l'ajout d'un additif sous un seul degré d'oxydation comme ce qui est proposé par l'ensemble des solutions identifiées dans l'état de l'art ne permet pas de tamponner en $P_{O2}$ le combustible et son environnement proche lors de sa fabrication.

Il apparait ainsi qu'il n'a pas été décrit à ce jour, de solution permettant par ajout d'éléments, de maintenir dans une plage de valeur optimisée, le potentiel d'oxygène du combustible (typiquement 400°C-2000°C), c'est à dire non seulement sur une large plage de température de fonctionnement en réacteur, de taux de combustion et de mode de fonctionnement mais aussi lors de la fabrication du combustible lui-même.

Plus précisément, le Demandeur propose une solution permettant la maîtrise du potentiel d'oxygène, en fonctionnement normal et/ou incidentel, un paramètre important pour l'amélioration des performances du combustible. En effet, le potentiel d'oxygène influe sur plusieurs propriétés telles que la conductivité thermique, le relâchement des gaz de fission, le comportement sous fluage et la spéciation des gaz de fission corrosifs pour la gaine. Maîtriser le potentiel d'oxygène en fonctionnement permet de contrôler et d'améliorer les performances du combustible.

En l'absence de dopage du combustible par un système rédox adapté, les réactions de fissions qui ont lieu au sein du combustible imposent naturellement un point de fonctionnement contrôlé par le couple $MoO_2/Mo$ se situant à l'intérieur du domaine de prédominance de la forme $TeI_2$ potentiellement corrosive vis-à-vis du matériau constitutif de la gaine (type Zircaloy).

La présente invention propose donc d'incorporer un additif dans le combustible nucléaire permettant de tamponner le potentiel oxygène de fonctionnement dudit combustible d'une façon stable et durable (même pour les hauts taux de combustion) dans un domaine de potentiel où notamment la forme corrosive $TeI_2$ est absente car déstabilisée au profit de l'espèce CsI, non corrosive.

L'invention a ainsi pour objet un combustible nucléaire additivé selon la revendication 1. Le combustible nucléaire de type oxyde générant des produits de fission tels que du tellure, du césium, de l'iode, lesquels génèrent par interaction chimique des espèces potentiellement corrosives. Le combustible nucléaire est additivé par au moins un système oxydo-réducteur comprenant une première et une seconde espèces comportant un élément commun présentant un degré d'oxydation différent dans chacune des deux espèces, ledit système présentant une courbe de potentiel d'oxygène en fonction de la température située dans un intervalle délimité par :

- une borne supérieure : la courbe de coexistence des espèces chimiques $I_2Te(g)$ et CsI(g) sous une même pression partielle imposée par l'équilibre entre CsI(l) et CsI(g), approximée entre 1000°C et 2000°C par un segment de droite dont les extrémités $P_{O2/11}$ et $P_{O2/12}$ ont pour coordonnées :

$$P_{O2/11} \ (T= 1000\,°C) \approx - 370 \ kJ/molO_2$$

et

$$P_{O2/12} \ (T= 2000\,°C) \approx - 230 \ kJ/molO_2 \ ;$$

- une borne inférieure : la courbe de potentiel d'oxygène du système $(Cs_2MoO_4/ \ Cs +Mo)$ approximée entre 1000°C et 2000°C par un segment de droite dont les extrémités $P_{O2/21}$ et $P_{O2/22}$ ont pour coordonnées :

$$P_{O2/21} \ (T= 1000\,°C) \approx - \ 530 \ kJ/molO_2$$

et

$$P_{O2/22} \ (T= 2000\,°C) \approx - \ 390 \ kJ/molO_2 \ ;$$

lesdites courbes définissent un intervalle dans lequel, les gaz volatils générés par la fission sont stabilisés sous des formes chimiques non corrosives vis-à-vis du matériau (par exemple en zircaloy) constitutif de la gaine et ce pour des taux de combustion inférieurs à environ 60 GWj/t.U (tonne d'uranium).

Le système peut présenter une courbe de potentiel d'oxygène en fonction de la température située dans un intervalle défini par un sous-domaine délimité par :

- une borne supérieure : la courbe de coexistence des espèces chimiques $Te_2(g)$ et CsI(g) sous une même pression partielle imposée par l'équilibre entre CsI(l) et CsI(g), approximée entre 1000°C et 2000°C par un segment de droite dont les extrémités $P_{O2/21'}$ et $P_{O2/22'}$ ont pour coordonnées :

$$P_{O2/11'} \ (T= 1000\,°C) \approx - 395 \ kJ/molO_2$$

et

$$P_{O2/12'} \ (T= 2000\,°C) \approx - 290 \ kJ/molO_2 \ ;$$

- une borne inférieure : la courbe de coexistence des espèces chimiques Cs(g) et CsI(g) sous une même pression partielle imposée par l'équilibre entre CsI(l) et CsI(g), approximée entre 1000°C et 2000°C par un segment de droite dont les extrémités $P_{O2/21'}$ et $P_{O2/22'}$ ont pour coordonnées :

$$P_{O2/21'} (T= 1000\,°C) \approx -\ 480 \text{ kJ/molO}_2$$

et

$$P_{O2/22'} (T= 2000\,°C) \approx -\ 360 \text{ kJ/molO}_2,$$

lesdites courbes définissant un sous-intervalle dans lequel, la fraction gazeuse des gaz volatils générés par la fission est à la fois non corrosive et minimale et ce pour des taux de combustion inférieurs ou égaux à environ 70 GWj/tU et préférentiellement inférieurs à environ 60 GWj/t.U (tonne d'uranium).

Pour les gaz rares (GR) tels Xe, Kr..., non réactifs chimiquement, la pression partielle évolue en première approximation selon la loi des gaz parfaits :

P = nRT/V, montrant une évolution de la pression (P) en fonction du nombre de mole (n) dépendant du taux de combustion, du volume (V) et de la température (T) et R : constante des gaz parfaits.

Pour les gaz volatils (GV) réactifs chimiquement (tels Cs, I, Te), même si leurs quantités élémentaires s'accroissent avec le taux de combustion, leurs pressions partielles sont imposées à tout instant par les équilibres solide-liquide-gaz comme :

$$CsI(g) = CsI(s, l),\ Te_x(g) = Te(l),$$

$$TeI_2 + Cs_2MoO_4 = Te(l) + 2CsI(s, l) + Mo(s) + O_2...,$$

(s, l et g étant relatives aux espèces solide, liquide et gaz).

Les constantes de ces équilibres thermodynamiques, qui imposent les pressions partielles des différents gaz, ne dépendent que de la température et de la pression partielle d'oxygène. Elles ne dépendent pas ni du volume libre, ni du taux de combustion tant que le système chimique reste inchangé, c'est-à-dire tant que certains produits de fission ou d'activation générés en réacteur, restent en quantité suffisamment faible pour ne pas perturber le système chimique considéré.

Ainsi, la figure 1 a été construite à partir d'un calcul sur la base d'un taux de combustion de 30 GWj/t U, de façon à maintenir constant le volume libre (variable en fonction du taux de combustion), lequel joue sur la pression partielle des gaz rares (GR). En revanche, le taux de combustion n'intervient pas sur les pressions partielles des gaz volatils (GV) au moins jusqu'à 60 GWj/t U.

Le Demandeur a donc considéré les hypothèses précédentes pour construire les courbes de potentiel d'oxygène fonction de la température dans le cadre de taux de combustion inférieurs à environ 60GWj/t U. Au delà d'un tel taux de combustion, la chimie du système chimique se complexifie considérablement du fait de la forte densité de produits engendrés par la réaction. Le contrôle du potentiel d'oxygène est assuré par un système tampon d'oxydo-réduction, se caractérisant par la coexistence de deux phases, l'une oxydée et l'autre réduite. Le choix du système rédox est fortement conditionné à la valeur de la $P_{O2}$ à atteindre. Il est visé un domaine de $P_{O2}$ tel que la présence en espèces corrosives soit minimale et ce, sur une large plage de température (typiquement entre 400°C-2000°C) et pour des taux de combustion significatifs pouvant typiquement atteindre 30 GWj/t U., et ce en contrôlant la $P_{O2}$ dans ce domaine à privilégier eu égard à la problématique générale précitée.

Et le Demandeur a identifié des formulations de combustibles à potentiel d'oxygène auto-régulé qui satisfont aux conditions concomitantes suivantes vis-à-vis de/des additif(s) à utiliser :

- des additifs n'induisant pas de contrainte technologique de fabrication trop importante au niveau industriel ;
- des additifs induisant une capacité tampon d'oxydo-réduction suffisante pour maintenir le potentiel d'oxygène dans la gamme optimale visée vis-à-vis de la problématique générale précitée (en termes de plage de température, taux de combustion...). Le potentiel oxygène optimal visé doit permettre une minimisation de la fraction gazeuse des espèces contenant Cs, I, Te et notamment éviter la formation de l'espèce corrosive $TeI_2$ ;
- des additifs ne modifiant pas d'une manière trop pénalisante les propriétés physico-chimiques du combustible (notamment sa conductivité thermique, son comportement au fluage, son point de fusion, sa densification,...) et son aptitude à être recyclé ;

- des additifs induisant avantageusement une croissance granulaire du combustible le cas échéant.

Selon une variante de l'invention, au moins une des deux espèces comporte un élément issu des produits de fission pouvant être :

- du molybdène, ledit système comportant un couple de type : $XMoO_4/XO$ où X appartient à la famille des alcalino-terreux (Ba, Ca, Sr) ;
- du baryum, ledit système comportant le couple $BaUO_4/BaO$.

Selon une variante de l'invention, le système oxydo-réducteur comprend au moins un des couples suivants :

- $TiO_2/Ti_4O_7$ ;
- $Ti_4O_7/Ti_3O_5$ ;
- $V_2O_3/VO$ ;
- $Ga_2O_3/Ga$ ;
- $Cr_2O_3/Cr$ ;
- $Cr_2O_3/CrO$ ;
- $CrO/Cr$ ;
- $Nb_2O_{5/2}/NbO_2$ ;
- $NbO_2/NbO$ ;
- $NbO_{5/2}/NbO_2/NbO$; ou
- le système oxydo-réducteur comprend un système mixte à base de $NbO_2/NbO_{5/2}$, la quantité de $NbO_2$ étant supérieure à la quantité de $NbO_{5/2}$.

Selon une variante de l'invention, le combustible comprend un pourcentage massique en première espèce et un pourcentage massique en seconde espèce compris entre environ quelques dixièmes et quelques pourcents par rapport au combustible nucléaire fissile.

Selon une variante de l'invention, les quantités d'oxydant et de réducteur incorporées dans le combustible sont équimolaires.

L'invention a aussi pour objet un élément combustible comprenant un combustible nucléaire selon l'invention et une gaine renfermant le combustible nucléaire.

L'invention a aussi pour objet un procédé de fabrication de comprimé comprenant le combustible nucléaire additivé selon l'invention, caractérisé en qu'il comprend les étapes suivantes :

- une étape de mélange des poudres de combustible nucléaire fissile pouvant être de l'$UO_2$, et du système oxydo-réducteur ;
- une étape de granulation mécanique du mélange par pressage à basse pression pouvant être comprise entre environ 50 MPa et 100 MPa ;
- une étape de mise en forme par pressage à plus haute pression pouvant être comprise entre environ 300 MPa et 700 MPa ;
- une étape de frittage sous atmosphère réductrice et/ou neutre à une température pouvant être de l'ordre de 1700°C.

Selon une variante de l'invention, l'étape de mélange des poudres est réalisée par cobroyage en milieu sec ou liquide.

Selon une variante de l'invention, l'étape de mélange des poudres est réalisée dans un mélangeur à turbine.

Selon une variante de l'invention, l'étape de frittage est effectuée avec un protocole de montée en température comprenant deux rampes de température séparées par un pallier de température situé à environ 300°C, puis un pallier à une température de l'ordre de 1700°C.

Selon une variante de l'invention, l'étape de frittage est réalisée dans un four en présence d'une quantité additionnelle de système oxydo-réducteur.

L'invention a encore pour objet un procédé de fabrication d'un élément de combustible de réacteur nucléaire comprenant une gaine et un combustible nucléaire additivé, caractérisé en ce qu'il comporte les étapes de procédé de fabrication de comprimé comprenant ledit combustible nucléaire additivé, selon l'invention.

L'invention sera mieux comprise et d'autres avantages apparaîtront à la lecture de la description qui va suivre donnée à titre non limitatif et grâce aux figures annexées parmi lesquelles :

- la figure 1 illustre les profils de pression partielle et spéciation des GF (hors He et Xe) dans un combustible $UO_2$ standard irradié à 30 GWj/t U, à 1500°C en fonction du potentiel d'oxygène de fonctionnement ;
- la figure 2 illustre le domaine de prédominance des produits de fission volatils majeurs (hors He et Xe) dans un combustible $UO_2$ standard, en fonction de la température et du potentiel d'oxygène de fonctionnement ;
- les figures 3a et 3b illustrent respectivement la position de systèmes tampons d'oxydo-réduction de $XMoO_4/XO$ et $BaUO_4/BaO$ susceptibles de tamponner la $P_{O2}$ dans le domaine de fonctionnement du combustible, par rapport aux zones de stabilité des produits de fission volatils ;
- la figure 4 illustre la position de système tampon d'oxydoréduction de Ti-O susceptible de tamponner la $P_{O2}$ dans le domaine de fonctionnement du combustible, par rapport aux zones de stabilité des produits de fission volatils ;
- la figure 5 illustre la position de système tampon d'oxydoréduction de V-O susceptible de tamponner la $P_{O2}$ dans le domaine de fonctionnement du combustible, par rapport aux zones de stabilité des produits de fission volatils ;
- la figure 6 illustre la position de système tampon d'oxydoréduction de Ga-O susceptible de tamponner la $P_{O2}$ dans le domaine de fonctionnement du combustible, par rapport aux zones de stabilité des produits de fission volatils ;
- la figure 7 illustre la position de système tampon d'oxydoréduction de Cr-O susceptible de tamponner la $P_{O2}$ dans le domaine de fonctionnement du combustible, par rapport aux zones de stabilité des produits de fission volatils ;
- la figure 8 illustre la position de système tampon d'oxydoréduction de Nb-O susceptible de tamponner la $P_{O2}$ dans le domaine de fonctionnement du combustible, par rapport aux zones de stabilité des produits de fission volatils ;
- la figure 9 illustre un exemple de cycle de température pouvant être utilisé dans une opération de frittage lors de la fabrication d'un objet comprenant un combustible additivé de l'invention ;
- la figure 10 illustre un exemple de dispositif de frittage (placé lui-même dans un four) pour l'élaboration de pastilles comprenant un combustible additivé de l'invention.

Le présent enseignement a ainsi pour objet une famille de combustibles fonctionnels permettant d'améliorer le comportement du combustible en réacteur comparativement aux combustibles connus dans l'art antérieur de par leurs propriétés permettant de contrôler et réguler le potentiel oxygène du système combustible/PF générés en réacteur.

Ainsi, le contrôle du potentiel d'oxygène est assuré par un système tampon d'oxydo-réduction, se caractérisant par la coexistence de deux phases, l'une oxydée et l'autre réduite. Le choix du système rédox est fortement conditionné par l'évolution de son potentiel d'oxydation RTlogPO2 en fonction de la température, dans une gamme favorable de potentiel d'oxydo-réduction, définie par les potentiels d'oxygène illustrés en figure 2, à savoir situés entre :

- une première courbe de potentiel d'oxygène, exprimé en kJ /mol $O_2$, en fonction de la température, approximée par un segment de droite dont les extrémités ont pour coordonnées :

$$P_{O2/11} \ (T = 1000\,°C) \approx -370 \ kJ/mol \ O_2$$

et

$$P_{O2/12} \ (T = 2000\,°C) \approx -250 \ kJ/mol \ O_2 \ ;$$

- une seconde courbe de potentiel d'oxygène, exprimé en kJ /mol $O_2$, en fonction de la température, approximée par un segment de droite dont les extrémités ont pour coordonnées :

$$P_{O2/21} \ (T = 1000\,°C) \approx -530 \ kJ/mol \ O_2$$

et

$$P_{O2/22} \ (T = 2000\,°C) \approx -410 \ kJ/mol \ O_2.$$

Dans ce domaine, défini entre les deux segments de droite [$P_{O2/11}$, $P_{O2/12}$] et [$P_{O2/21}$, $P_{O2/22}$], les gaz volatils générés par la fission sont stabilisés sous des formes chimiques non corrosives vis-à-vis du zircaloy constitutif de la gaine et ce pour des taux de combustion significatifs (au moins 30 GWj/t U (tonne d'uranium)).

Parallèlement, il est à noter que les modes d'élaboration de ces combustibles, s'en trouvent également notablement améliorés puisque le matériau est capable de tamponner in-situ le potentiel d'oxygène de frittage, paramètre pilotant sensiblement les propriétés et caractéristiques du produit fini.

Les systèmes tampons oxydo-réducteurs considérés sont tous réactifs dans une gamme de températures comprise entre 500 et 2000 °C, sur un intervalle variable en fonction des couples oxydo-réducteurs.

Les diagrammes de prédominances présentés ci-après illustrent bien que le potentiel oxygène de ces couples redox rentrent en tout ou partie dans la zone optimale de potentiel oxygène telle que décrite précédemment et illustré grâce aux figures 1 et 2 (minimisation de la fraction gazeuse et absence d'espèce fortement corrosive comme $TeI_2$).

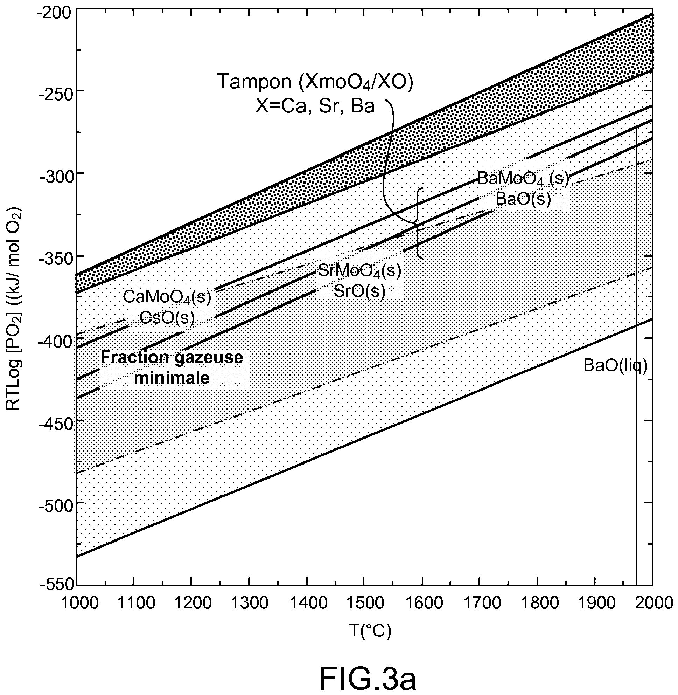

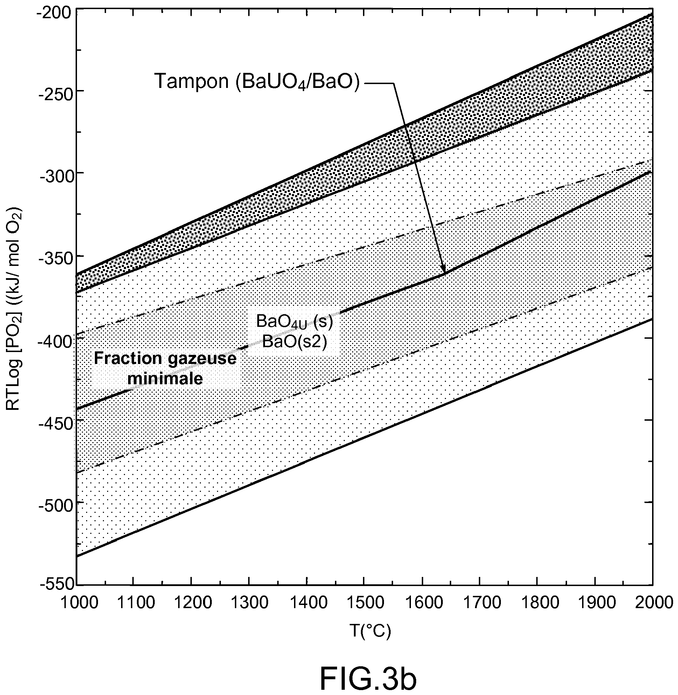

Les figures 3a et 3b illustrent les cas de systèmes (Ba, Ca, Sr)-Mo-O et Ba-U-O :

Les systèmes tampons ($X-Mo-O_4$ ou $X-U-O_4$ : XO) du baryum (ou du Sr ou encore du Ca) sont susceptibles de tamponner la $P_{O2}$ dans le domaine de fonctionnement du combustible, sur toute la gamme de température entre 1000 et 2000°C. Ces composés chimiques, naturellement générés par les produits de fission de l'uranium, sont donc susceptibles de participer à la régulation de l'$O_2$ si le combustible est soumis à une perturbation réductrice ; le système ($Ba-U-O_4$/Ba-O) est actif dans toute la zone où la fraction gazeuse est minimale entre 1000 et 2000°C ; la capacité tampon utile des systèmes ($X-Mo-O_4$, X-O) est de 3 mol O / mol X (si Mo est en excès). Celle du système ($Ba-U-O_4$ / Ba-O) est de 1 mol O/mol Ba.

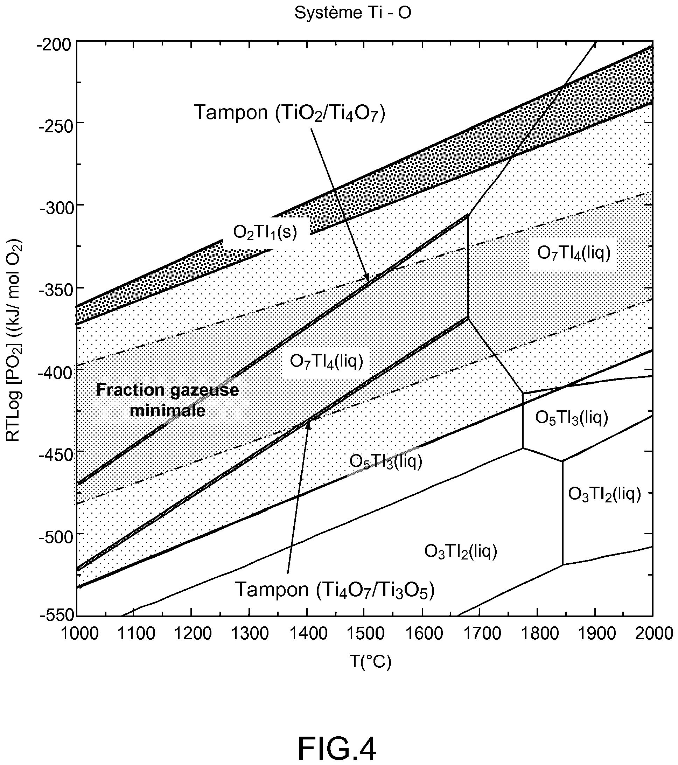

La figure 4 illustre les cas du système Ti-O

Le système Ti-O présente de multiples phases polymères dans lesquelles le degré d'oxydation du titane varie de +4 à +3 ; à température inférieure à 1700°C, seuls deux systèmes tampons du titane sont susceptibles de tamponner la $P_{O2}$ dans le domaine de fonctionnement du combustible. La capacité tampon utile maximale est de 1/3 mol O / mol Ti. Au-delà de 1700°C, la phase liquide $Ti_4O_7$ prédomine dans tout le domaine d'intérêt.

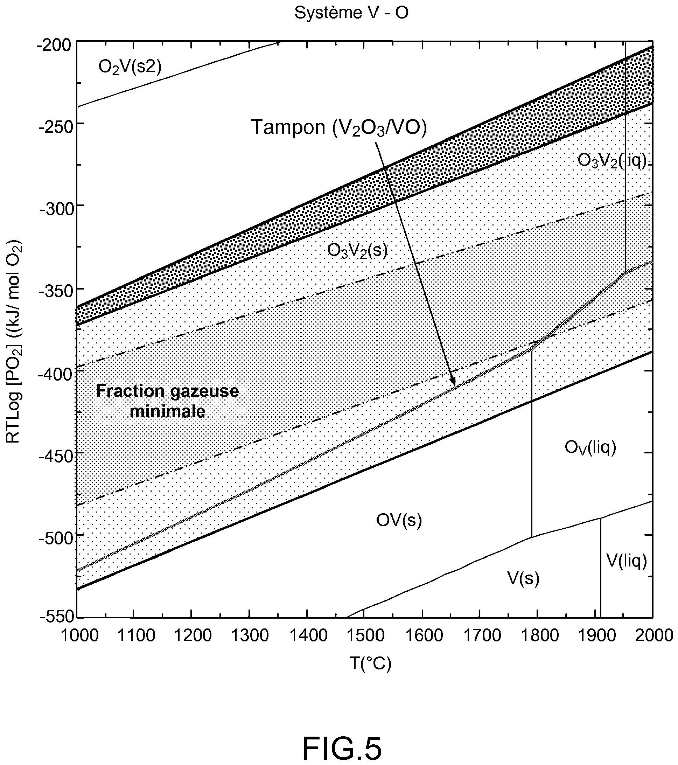

La figure 5 illustre le cas du système V-O

Le système redox ($V_2O_3$/VO) du vanadium se situe plutôt dans la zone réductrice du domaine de fonctionnement du combustible. Le système ($V_2O_3$/VO) est actif dans la zone de gaz minimum à hautes températures (supérieure à 1800°C). La phase liquide $VO_{(l)}$ apparaît au voisinage de 1800°C. La capacité tampon globale est de 1/2 mol O / mol V.

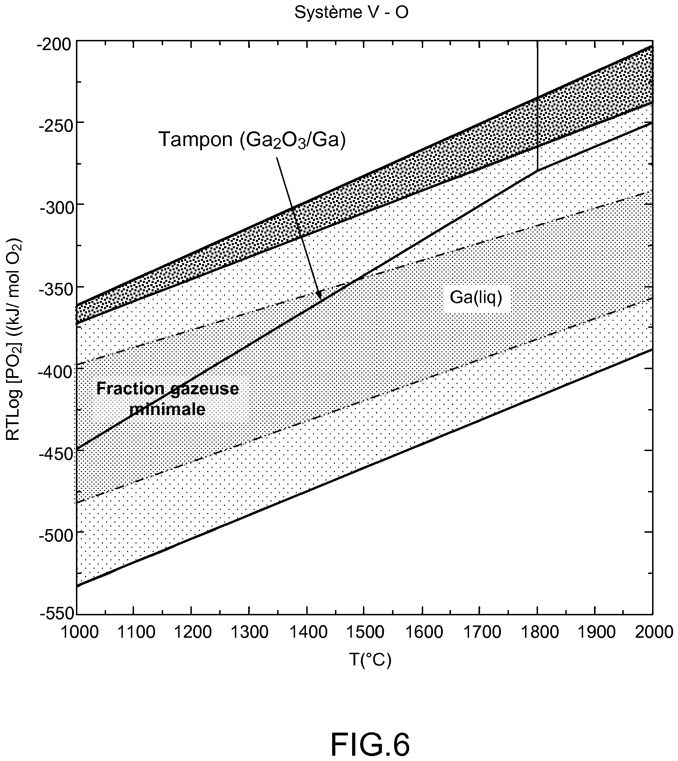

La figure 6 illustre le cas du système Ga-O :

Le système redox ($Ga_2O_3$/Ga) du gallium se situe à l'intérieur du domaine de prédominance des gaz non corrosifs (en gris moyen et gris clair), sur tout l'intervalle de température compris entre 1000 et 2000°C. Le système ($Ga_2O_3$/Ga) est actif dans la zone de gaz minimum à températures inférieures à 1500°C. La capacité tampon globale est de 3/2 mol O / mol Ga.

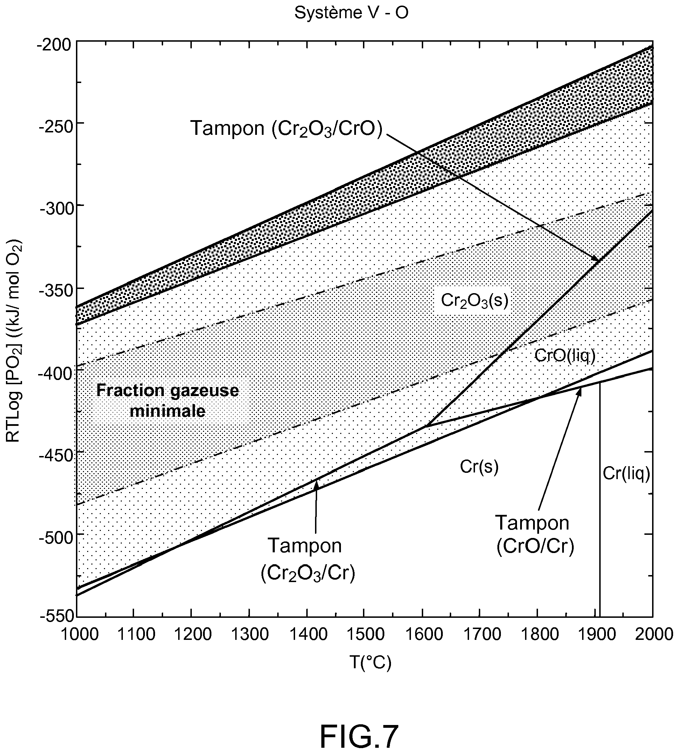

La figure 7 illustre le cas du système Cr-O :

Les trois systèmes redox du chrome se situent plutôt dans la zone réductrice du domaine de fonctionnement du combustible. Le système (CrO/Cr) est actif dans la zone de gaz minimum à hautes températures (supérieurs à 1750°C). La phase $CrO_{(l)}$ apparaît dès 1650°C. La capacité tampon globale est de 3/2 mol O / molCr.

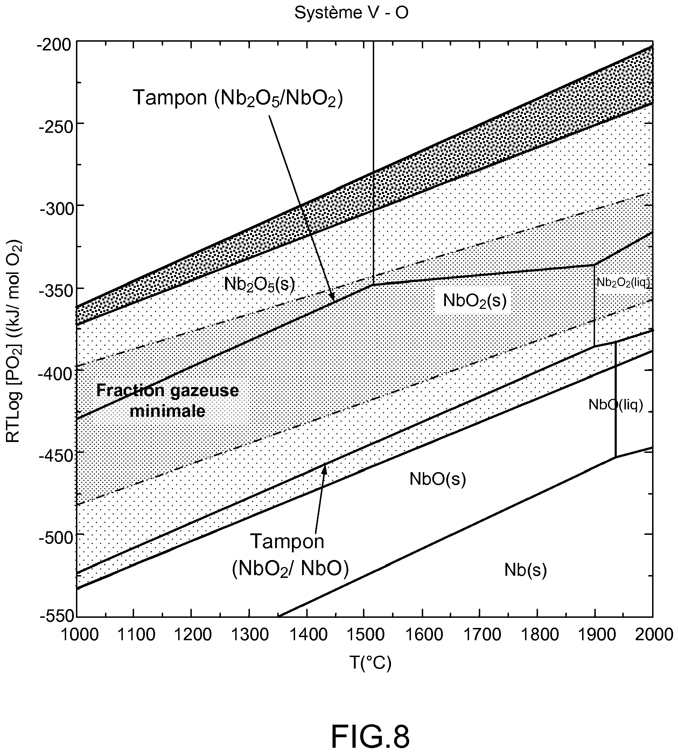

La figure 8 illustre le cas du système Nb-O :

Le système Nb-O est présent sous trois degrés d'oxydation différents : +2, +4, +5 dans le domaine de fonctionnement du combustible ; les systèmes redox du niobium ($Nb_2O_5$/$NbO_2$) et ($NbO_2$/NbO) se situent tous les deux dans le domaine de prédominance des gaz non corrosifs (en gris moyen et gris clair), sur tout l'intervalle de température compris entre 1000 et 2000°C. En outre, le système tampon ($Nb_2O_5$/$NbO_2$) se situe exclusivement dans la zone où la fraction gazeuse est minimale ;

- la capacité tampon utile maximale est de 3/2 mol O / mol Nb, le couple ($Nb_2O_5$/$NbO_2$) apportant 1/2 mol O / mol Nb et le couple ($NbO_2$/NbO) apportant 1 mol O / mol Nb ;
- la littérature indique que les réactions d'oxydo-réduction du niobium sont susceptibles d'être activées thermodynamiquement dès la température de 1000°C: il en résulte que les tampons rédox du niobium sont particulièrement adaptés pour un contrôle de la $P_{O2}$ sur toute la gamme de température de fonctionnement du combustible.

Exemple de procédé de fabrication de combustibles de l'invention :

D'une manière générale (mais non restrictive), le procédé de fabrication des comprimés de combustible additivé selon l'invention, peut se décliner selon les étapes suivantes :

1) le mélange de la poudre d'$UO_2$ avec les poudres constituant le système tampon par cobroyage ou mélangeur à turbine, de manière à réaliser un mélange intime. Le cobroyage peut être réalisé à sec ou en milieu liquide ;
2) dans le cas d'un broyage en milieu liquide uniquement : le séchage puis le tamisage à $850\mu$m ;
3) l'ajout de lubrifiant pour faciliter la mise en forme ultérieure (0,2 à 0,5% m (en masse) de stéarate de zinc ou d'un autre lubrifiant) ;
4) la granulation mécanique du mélange par pressage à basse pression (50 à 100MPa) puis tamisage entre 400 et $900\mu$m ;
5) la mise en forme par pressage uniaxial double effet à haute pression (entre 300 et 700MPa) ;
6) le frittage sous atmosphère réductrice et/ou neutre à environ 1700°C. Les comprimés sont placés dans une nacelle fermée, à proximité d'une quantité suffisante d'un mélange des poudres constituant le tampon redox utilisé au sein des comprimés. Cette quantité de tampon a pour fonction de diminuer l'effet du gradient de concentration en matériaux tampon entre l'intérieur et l'extérieur des comprimés. Quand il existe, ce gradient peut conduire à l'apparition d'une zone périphérique dans les pastilles présentant une microstructure différente de celle de la zone corticale.

Exemple de procédé de fabrication d'objet type comprimé à base de combustible de l'invention :

Pour ce qui concerne la fabrication d'objets (comprimés) crus (i.e. avant frittage), le protocole de fabrication des combustibles comportant un système tampon peut s'appuyer sur l'enchaînement des étapes suivantes :

la préparation des comprimés est effectuée suivant un protocole classique en métallurgie des poudres appliqué à la fabrication des combustibles qui comprend les étapes décrites ci-dessous :

1) le mélange/broyage des poudres d'$UO_2$, et du système tampon dans un broyeur planétaire en phase liquide (éthanol) ;
2) l'étuvage à 60°C jusqu'à évaporation complète de l'éthanol,
3) le tamisage (850 microns) ;
4) la granulation du mélange à 80 MPa puis le concassage et le tamisage à 850 microns ;
5) le pressage par presse uni-axiale double effet avec lubrification de la matrice par du stéarate de zinc en spray. La pression appliquée pour la fabrication des deux types de pastilles est de 400MPa.

Il est à noter que pour estimer les quantités de dopant (système tampon) à incorporer dans le combustible, l'on peut s'appuyer sur le fait qu'il faut disposer d'une capacité tampon de l'ordre de 0.008 mol O/mol U à la fois en oxydation et en réduction pour encaisser, à 30 GWj/t U de taux de combustion.

Pour déstabiliser la forme $Tel_2$ corrosive générée par la fission, il faut, pour un taux de combustion de 30 GWj/t U, piéger 0,008 mol O en excès / U initial, soit 0,257 mol O / U fissionné.

La fabrication du combustible dopé avec les systèmes tampon précités repose sur le suivi du protocole général décrit précédemment.

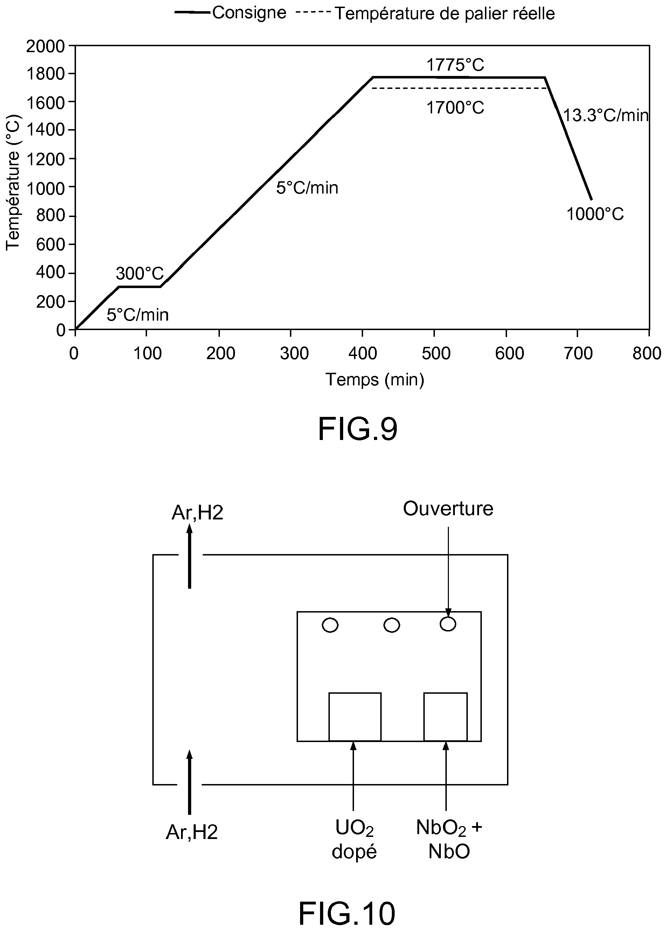

Un exemple de cycle de frittage est illustré en figure 9 qui montre un programme thermique, la température du plateau final pouvant varier typiquement entre 1700 et 1800°C.

Exemple de fabrication d'un combustible $UO_2$ dopé avec le tampon $NbO_2$/NbO ou $Nb_2O_5$/$NbO_2$ :

Le dimensionnement d'un combustible $UO_2$ dopé au niobium est développé en détails ci-après.

Le calcul est réalisé sur la base d'un $UO_2$ stoechiométrique soit :

$$O/U = 2,0.$$

Si 1 mol d'$UO_2$ est fissionné dans un réacteur nucléaire, il faut disposer a minima d'une capacité tampon oxydante de l'ordre de 0,008 mol / mol U soit 0,257 mol O / U fissionné pour qu'un combustible irradié à 3,11 % (soit environ 30 GWj/t U) soit maintenu dans la zone de phase gazeuse minimale.

Cette quantité correspond globalement à celle nécessaire pour réduire partiellement ou totalement les espèces

oxydantes $Cs_2MoO_4$, $CeO_2$ et $MoO_2$ générés par la fission de l'uranium (réduction de Cs2MoO4 en Csl, $CeO_2$ en $Ce_2O_3$ et $MoO_2$ en excès en Mo) afin d'imposer un potentiel de fonctionnement du combustible dans le domaine optimal défini en figure 2, garantissant une déstabilisation totale de la forme corrosive Tel2.

D'après la réaction $NbO_2+ 1/2O \rightarrow NbO_{5/2}$, il faut au moins 0,514 mol de $NbO_2$/mol U fissionné pour piéger cet oxygène en excès. Ce qui fait 1,905 mol $NbO_2$ / kg d'$UO_2$ fissionné soit l'équivalent de 23,8 % en poids de $NbO_2/UO_2$ fissionné.

Si on vise un taux de combustion de 50 GWj/t U, il faut introduire une quantité de 1,19 % $NbO_2/UO_2$. En réduction, le dégagement de césium est d'autant plus retardé que la teneur en élément réducteur est grande. Il n'y a donc pas de quantité minimale ni maximale à introduire. Si on vise un système tampon équimolaire en oxydant et réducteur, on calcule 1,905 mol $NbO_{5/2}$/kg d'$UO_2$ fissionné soit l'équivalent de 25,3 % en poids de $Nb_2O_5/UO_2$ fissionné.

Si on vise un taux de combustion de 50 GWj/t U %, il faut introduire une quantité de 1,27 % $Nb_2O_5/UO_2$.

On calcule ainsi un système tampon composé de 1,27 % en poids $Nb_2O_5/UO_2$ et 1,19 % en poids de $NbO_2/UO_2$, soit une quantité totale équivalente à 2,58 % en poids $Nb_2O_5/UO_2$ pour un taux de combustion de 50 GWj/t U %.

Le tableau ci-dessous rassemble le dimensionnement pour les différents systèmes rédox du niobium pour un combustible de taux de combustion de 50 GWj/t U :

| | $NbO_{5/2}$ | $NbO_2$ | NbO | Equivalent % $NbO_{5/2}/UO_2$ |
|---|---|---|---|---|
| $NbO_{5/2}$ / $NbO_2$ | | | | |
| %poids/$UO_2$ | 1,27 | 1,19 | | 2,53 |
| Mol/mol$UO_2$ | 0,0257 | 0,0257 | | |
| Pour1kg$UO_2$ | 12,7 g | 11,9 g | | |
| $NbO_2$/NbO | | | | |
| %poids/$UO_2$ | | 0,60 | 0,52 | 1,27 |
| Mol/mol$UO_2$ | | 0,0129 | 0,0129 | |
| Pour1kg$UO_2$ | | 6,0 g | 5,2g | |
| Système mixte | | | | |
| %poids/$UO_2$ | 0,30 | 1,19 | | 1,57 |
| Mol/mol$UO_2$ | 0,0061 | 0,0257 | | |
| Pour1kg$UO_2$ | 3,0g | 11,9 g | | |

Le tampon mixte correspond au dopant $NbO_2$ majoritairement, capable de réagir à la fois en oxydation (système rédox ($NbO_{5/2}/NbO_2$) et en réduction (système rédox ($NbO_2$/NbO). On y joint de l'ordre de 0,3 % de $Nb_2O_5$ afin de stabiliser le potentiel d'oxygène et de générer une phase liquide lors de la fabrication pour favoriser la croissance des grains d'$UO_2$.

Si on part initialement d'un combustible $UO_2$ sur-stoechiométrique, il faut ajouter une quantité supplémentaire de réducteur afin de compenser la sur-stoechiométrie initiale de l'oxyde d'uranium.

Pour le système tampon ($NbO_2$/NbO) par exemple, d'après l'équation $UO_{2+x}$ + x NbO $\leftrightarrow$ $UO_2$ + x $NbO_2$, il faut à minima imposer un rapport molaire initial NbO/$UO_2$ = x lors de la fabrication. A cette quantité s'ajoute celle calculée ci-dessus pour tamponner le potentiel d'oxygène en réacteur.

On peut alors obtenir une microstructure $UO_2$ dopée avec 3% de $NbO_2$/NbO avec des tailles moyennes de grains d'environ 20 microns.

La figure 10 schématise un dispositif de frittage (placé lui-même dans un four) pour l'élaboration des pastilles contenant le système tampon. Plus précisément et avantageusement, l'opération de frittage est effectuée au niveau de la poudre additivée en espèce oxydo-réductrice en présence de poudre externe de cette même espèce oxydo-réductrice, permettant d'homogénéiser la $PO_2$ dans le four et ainsi améliorer la qualité du produit fini. Dans l'exemple illustré en figure 10, la poudre $UO_2$ additivé avec le couple $NbO_2$/NbO est mise dans un creuset en molybdène avec une poudre additionnelle de $NbO_2$/NbO.

De manière générale :

- les proportions des systèmes oxydo-réducteurs additifs utilisés dans la présente invention sont inférieures à 3 % massique, une teneur en tampon trop élevée induisant des modifications pénalisantes du combustible vis-à-vis de ses propriétés ou comportement en réacteurs et
- les proportions des systèmes oxydo-réducteurs additifs sont supérieures à 1%, une trop faible capacité tampon ne permettant pas d'assurer une maîtrise de la $P_{O2}$.

Préférentiellement, ces proportions sont supérieures à environ 1,1 % afin de pouvoir tamponner le potentiel d'oxygène lors du fonctionnement en réacteur, pour des taux de combustion visés de l'ordre de 50 GWj/t U et des systèmes tampons considérés,

Certains systèmes oxydo-réducteurs ont en effet une capacité tampon supérieure à d'autres, par exemple la capacité tampon maximale pour le système $TiO_2/Ti_4O_7$ est de 1/4 mole d'atome d'oxygène par mole de Ti apporté, alors que pour le système $NbO_2/NbO$ tel que décrit précédemment, elle est de 1 mole d'oxygène par mole de Nb.

**Revendications**

1. Combustible nucléaire additivé, comprenant un combustible nucléaire de type oxyde générant des produits de fission tels que du tellure, du césium, de l'iode, lesquels génèrent par interaction chimique des espèces potentiellement corrosives, **caractérisé en ce que** :

   - le combustible est additivé par au moins une poudre d'un système oxydo-réducteur comprenant une première et une seconde espèces comportant un élément commun présentant un degré d'oxydation différent dans chacune des deux espèces :
   - au moins une des deux espèces comporte un élément issu des produits de fission étant du molybdène et ledit système comporte un couple de type : $XMoO_4/XO$ où X appartient à la famille des alcalino-terreux (Ba, Ca, Sr) ou ;
   - au moins une des deux espèces comporte un élément issu des produits de fission étant du baryum et ledit système comporte le couple $BaUO_4/BaO$ ou ;
   - le système oxydo-réducteur comprend au moins un des couples suivants :
   - $TiO_2/Ti_4O_7$ ;
   - $Ti_4O_7/Ti_3O_5$;
   - $V_2O_3/VO$ ;
   - $Ga_2O_3/Ga$ ;
   - $Cr_2O_3/Cr$ ;
   - $Cr_2O_3/CrO$ ;
   - $CrO/Cr$ ;
   - $NbO_{5/2}/NbO_2$ ;
   - $NbO_2/NbO$ ;
   - $NbO_{5/2}/NbO_2/NbO$ ou
   - le système oxydo-réducteur comprend un système mixte à base de $NbO_2/NbO_{5/2}$, la quantité de $NbO_2$ étant supérieure à la quantité de $NbO_{5/2}$.

2. Combustible nucléaire additivé selon la revendication 1, caractérisé en qu'il comprend une somme du pourcentage massique en première espèce et du pourcentage massique en seconde espèce comprise entre 1 et 3%.

3. Combustible nucléaire additivé selon la revendication 1, caractérisé en qu'il comprend une somme du pourcentage massique en première espèce et du pourcentage massique en seconde espèce comprise entre 1,1 et 3%.

4. Elément combustible comprenant un combustible nucléaire selon les revendications 1 à 3 et une gaine renfermant le combustible nucléaire.

5. Procédé de fabrication de comprimé comprenant le combustible nucléaire additivé selon l'une des revendications 1 à 3, **caractérisé en ce qu'**il comprend les étapes suivantes :

   - une étape de mélange des poudres de combustible nucléaire fissible pouvant être de l'$UO_2$, et du système oxydo-réducteur ;
   - une étape de granulation mécanique du mélange par pressage à basse pression pouvant être comprise entre environ 50 MPa et 100 MPa ;
   - une étape de mise en forme par pressage à plus haute pression pouvant être comprise entre environ 300 MPa et 700 MPa ;
   - une étape de frittage sous atmosphère réductrice et/ou neutre à une température pouvant être de l'ordre de 1700°C.

6. Procédé de fabrication de comprimé comprenant le combustible nucléaire additivé selon la revendication 5, **carac-**

**térisé en ce que** l'étape de mélange des poudres est réalisée par cobroyage en milieu sec ou liquide.

7. Procédé de fabrication de comprimé comprenant le combustible nucléaire additivé selon la revendication 5, **caractérisé en ce que** l'étape de mélange des poudres est réalisée dans un mélangeur à turbine.

8. Procédé de fabrication de comprimé comprenant le combustible nucléaire additivé selon l'une des revendications 5 à 7, **caractérisé en ce que** l'étape de frittage est effectuée avec un protocole de montée en température comprenant deux rampes de température séparées par un pallier de température situé à environ 300°C, puis un pallier à une température maximale de l'ordre de 1700°C.

9. Procédé de fabrication de comprimé comprenant le combustible nucléaire additivé selon l'une des revendications 5 à 8, **caractérisé en ce que** l'étape de frittage est réalisée dans un four en présence d'une quantité additionnelle de système oxydo-réducteur.

10. Procédé de fabrication d'un élément de combustible de réacteur nucléaire comprenant une gaine et un combustible nucléaire additivé, **caractérisé en ce qu'**il comporte les étapes de procédé de fabrication de comprimé comprenant ledit combustible nucléaire additivé, selon l'une des revendications 5 à 9.

**Patentansprüche**

1. Additivierter Kernbrennstoff, der einen Kernbrennstoff des Oxidtyps umfasst, der Spaltprodukte wie Tellurium, Cäsium, Iod erzeugt, die potentiell korrosive Spezies durch chemische Interaktion erzeugen, **dadurch gekennzeichnet, dass**:

   - der Brennstoff mit wenigstens einem Pulver eines Redox-Systems additiviert wird, umfassend eine erste und eine zweite Spezies, die ein gemeinsames Element mit einem unterschiedlichen Oxidationsgrad in jeder der beiden Spezies umfassen:
   - wenigstens eine der beiden Spezies ein von Spaltprodukten gewonnenes Element umfasst, das Molybdän ist, und das System ein Paar des folgenden Typs umfasst: $XMoO_4/XO$, wobei X zur Erdalkalifamilie (Ba, Ca, Sr) gehört; oder
   - wenigstens eine der beiden Spezies ein von Spaltprodukten gewonnenes Element umfasst, das Barium ist, und das System das Paar $BaUO_4/BaO$ umfasst; oder
   - das Redox-System wenigstens eines der folgenden Paare umfasst:
   - $TiO_2/Ti_4O_7$;
   - $Ti_4O_7/Ti_3O_5$;
   - $V_2O_3/VO$;
   - $Ga_2O_3/Ga$;
   - $Cr_2O_3/Cr$;
   - $Cr_2O_3/CrO$;
   - $CrO/Cr$;
   - $NbO_{5/2}/NbO_2$;
   - $NbO_2/NbO$;
   - $NbO_{5/2}/NbO_2/NbO$; oder
   - das Redox-System ein gemischtes System auf der Basis von $NbO_2/NbO_{5/2}$ umfasst, wobei die Menge an $NbO_2$ größer ist als die Menge an $NbO_{5/2}$.

2. Additivierter Kernbrennstoff nach Anspruch 1, **dadurch gekennzeichnet, dass** er eine Summe aus dem Masseprozentanteil der ersten Spezies und dem Masseprozentanteil der zweiten Spezies zwischen 1 % und 3 % umfasst.

3. Additivierter Kernbrennstoff nach Anspruch 1, **dadurch gekennzeichnet, dass** er eine Summe aus dem Masseprozentanteil der ersten Spezies und dem Masseprozentanteil der zweiten Spezies zwischen 1,1 % und 3 % umfasst.

4. Brennstoffelement, das einen Kernbrennstoff nach einem der Ansprüche 1 bis 3 und eine den Kernbrennstoff enthaltende Ummantelung umfasst.

5. Verfahren zur Herstellung einer Tablette, die den additivierten Kernbrennstoff nach einem der Ansprüche 1 bis 3 umfasst, **dadurch gekennzeichnet, dass** es die folgenden Schritte beinhaltet:

- einen Schritt des Mischens von Pulvern von spaltbarem Kernbrennstoff, der $UO_2$ sein kann, und des Redox-Systems;
- einen Schritt des mechanischen Granulierens des Gemischs durch Pressen mit niedrigem Druck, der zwischen etwa 50 MPa und 100 MPa liegen kann;
- einen Schritt des Pressformens mit einem höheren Druck, der zwischen etwa 300 MPa und 700 MPa liegen kann;
- einen Schritt des Sinterns unter einer Reduktions- und/oder neutralen Atmosphäre bei einer Temperatur, die etwa 1700°C betragen kann.

6. Verfahren zur Herstellung einer Tablette, die den additivierten Kernbrennstoff nach Anspruch 5 umfasst, **dadurch gekennzeichnet, dass** der Pulvermischschritt durch gemeinsames Zermahlen in einem trockenen oder flüssigen Medium erfolgt.

7. Verfahren zur Herstellung einer Tablette, die den additivierten Kernbrennstoff nach Anspruch 5 umfasst, **dadurch gekennzeichnet, dass** der Pulvermischschritt in einem Turbinenmischer durchgeführt wird.

8. Verfahren zur Herstellung einer Tablette, die den additivierten Kernbrennstoff nach einem der Ansprüche 5 bis 7 umfasst, **dadurch gekennzeichnet, dass** der Sinterungsschritt mit einem Temperaturanstiegsprotokoll durchgeführt wird, das zwei Temperaturrampen umfasst, die durch eine Temperaturstufe um etwa 300°C, gefolgt von einer Stufe bei einer Höchsttemperatur von etwa 1700°C getrennt sind.

9. Verfahren zur Herstellung einer Tablette, die den additivierten Kernbrennstoff nach einem der Ansprüche 5 bis 8 umfasst, **dadurch gekennzeichnet, dass** der Sinterungsschritt in einem Ofen in Anwesenheit einer zusätzlichen Menge des Redox-Systems durchgeführt wird.

10. Verfahren zur Herstellung eines Kernreaktorbrennstoffelements, das eine Ummantelung und einen additivierten Kernbrennstoff umfasst, **dadurch gekennzeichnet, dass** es die Schritte des Verfahrens zur Herstellung einer Tablette beinhaltet, die den additivierten Kernbrennstoff nach einem der Ansprüche 5 bis 9 umfasst.

**Claims**

1. An additivated nuclear fuel, comprising a nuclear fuel of the oxide type generating fission products such as tellurium, cesium, iodine, which generate potentially corrosive species by chemical interaction, **characterised in that**:

   - the fuel is additivated by at least one powder of a redox system comprising a first and a second species comprising a common element having a different degree of oxidation in each of the two species:
   - at least one of the two species comprises an element derived from fission products, which is molybdenum, and said system comprises a couple of the following type: $XMoO_4/XO$, where X belongs to the alkaline-earth family (Ba, Ca, Sr); or
   - at least one of the two species comprises an element derived from fission products, which is barium, and said system comprises the $BaUO_4/BaO$ couple; or
   - the redox system comprises at least one of the following couples:
   - $TiO_2/Ti_4O_7$;
   - $Ti_4O_7/Ti_3O_5$;
   - $V_2O_3/VO$;
   - $Ga_2O_3/Ga$;
   - $Cr_2O_3/Cr$;
   - $Cr_2O_3/CrO$;
   - $CrO/Cr$;
   - $NbO_{5/2}/NbO_2$;
   - $NbO_2/NbO$;
   - $NbO_{5/2}/NbO_2/NbO$; or
   - the redox system comprises a mixed system based on $NbO_2/NbO_{5/2}$, the quantity of $NbO_2$ being greater than the quantity of $NbO_{5/2}$.

2. The additivated nuclear fuel as claimed in claim 1, **characterised in that** it comprises a sum of the mass percentage of the first species and of the mass percentage of the second species that is between 1% and 3%.

**EP 2 917 917 B1**

3. The additivated nuclear fuel as claimed in claim 1, **characterised in that** it comprises a sum of the mass percentage of the first species and of the mass percentage of the second species that is between 1.1% and 3%.

4. A fuel element comprising a nuclear fuel as claimed in any one of claims 1 to 3 and a cladding containing the nuclear fuel.

5. A method for manufacturing a tablet comprising the additivated nuclear fuel as claimed in any one of claims 1 to 3, **characterised in that** it comprises the following steps:

   - a step of mixing powders of fissionable nuclear fuel that can be $UO_2$ and of the redox system;
   - a step of mechanically granulating the mixture by pressing at a low pressure, which can be between approximately 50 MPa and 100 MPa;
   - a step of forming by pressing at a higher pressure, which can be between approximately 300 MPa and 700 MPa;
   - a step of sintering under a reducing and/or neutral atmosphere at a temperature that can be approximately 1,700°C.

6. The method for manufacturing a tablet comprising the additivated nuclear fuel as claimed in claim 5, **characterised in that** the powder mixing step is performed by co-grinding in a dry or liquid medium.

7. The method for manufacturing a tablet comprising the additivated nuclear fuel as claimed in claim 5, **characterised in that** the powder mixing step is performed in a turbine mixer.

8. The method for manufacturing a tablet comprising the additivated nuclear fuel as claimed in any one of claims 5 to 7, **characterised in that** the sintering step is performed with a temperature rise protocol comprising two temperature ramps separated by a temperature stage at approximately 300°C, followed by a stage at a maximum temperature of approximately 1,700°C.

9. The method for manufacturing a tablet comprising the additivated nuclear fuel as claimed in any one of claims 5 to 8, **characterised in that** the sintering step is performed in a furnace in the presence of an additional quantity of redox system.

10. A method for manufacturing a nuclear reactor fuel element comprising a cladding and an additivated nuclear fuel, **characterised in that** it comprises the steps of the method for manufacturing a tablet comprising said additivated nuclear fuel as claimed in any one of claims 5 to 9.

**15**

Combustible irradié : Fraction gazeuse
30 GWj/t U - 1500°C

FIG.1

Mo - O$_2$ - Cs -
P=150 bar

FIG.2

FIG.3a

FIG.3b

Système Ti - O

FIG.4

Système V - O

FIG.5

Système V - O

FIG.6

FIG.7

Système V - O

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0541458 A1
- EP 0508715 A1
- EP 0562404 A3
- US 4022662 A
- US 4029545 A
- US 4025288 A
- CA 977952
- JP 2655908 B
- US 2010091933 A
- FR 2817385
- JP 6258477 A